# EUROPÄISCHE PATENTSCHRIFT

(11) **EP 2 890 628 B1**
(45) Veröffentlichungstag und Bekanntmachung des Hinweises auf die Patenterteilung: **20.04.2016**
(21) Anmeldenummer: 13753607.4
(22) Anmeldetag: 21.08.2013
(51) Int. Cl.: B66C 23/78, B60S 9/02

(54) **VERRIEGELUNGSVORRICHTUNG**
LOCKING DEVICE
DISPOSITIF DE VERROUILLAGE

(30) Priorität: 31.08.2012 DE 102012215534
(43) Veröffentlichungstag der Anmeldung: 08.07.2015
(73) Patentinhaber: Putzmeister Engineering GmbH, 72631 Aichtal (DE)
(72) Erfinder: GERLOF, Torben, 72655 Altdorf (DE); JAUMANN, Oliver, 71134 Aidingen (DE); GÖGGELMANN, Gernot, 72622 Nürtingen (DE); DIEBOLD, Martin, 72768 Reutlingen (DE)
(74) Vertreter: Wolf, Eckhard
(86) Internationale Anmeldenummer: PCT/EP2013/067370
(87) Internationale Veröffentlichungsnummer: WO 2014/033024

(56) Entgegenhaltungen:
- DE-A1- 4 211 493
- JP-U- H0 564 026
- JP-U- S56 119 755
- JP-U- S60 130 287

## Beschreibung

Die Erfindung betrifft eine Verriegelungsvorrichtung für an einem Fahr- oder Traggestell angeordnete und von einer eingezogenen Transportstellung in eine ausgezogene Arbeitsstellung ausfahrbare, ausschwenkbare oder teleskopierbare Stützorgane für eine Arbeitsmaschine, mit einem Riegelbolzen, der in einer gestellfesten, quer zur Ausziehrichtung des Stützorgans angeordneten Führungsbuchse zwischen einer Sperrstellung und einer Entsperrstellung verschiebbar ist und unter Einwirkung einer Feder in Richtung Sperrstellung vorgespannt ist, mit einem den Riegelbolzen zwischen der Sperrstellung und der Entsperrstellung verschiebenden Betätigungsorgan, und mit einem an dem Stützorgan starr angeordneten Rast- und Leitorgan für den Riegelbolzen, wobei das Rast- und Leitorgan eine den Riegelbolzen in eine Freigabestellung schiebende Leitkurve aufweist und wobei der Riegelbolzen in der Freigabestellung selbsttätig in seine Sperrstellung bewegbar ist.

Fahrbare Arbeitsmaschinen mit Kran- oder Verteilermastaufbauten werden in der Arbeitsstellung üblicherweise mit seitlich ausfahrbaren oder ausschwenkbaren Stützbeinen am Boden abgestützt (EP-A 0 357 988). Dabei ist es wichtig, dass die beispielsweise mittels Hydromotoren ausfahrbaren Stützorgane sowohl in ihrer inneren Transportstellung als auch in ihrer Abstützstellung mit Hilfe der Verriegelungsvorrichtung wirksam und zuverlässig arretiert sind. Eine Verriegelungsvorrichtung der eingangs genannten Art ist aus der DE 42 11 493 A1 bekannt, Diese Vorrichtung weist ein Rast- und Leitorgan auf, das aus jeweils einem vergleichsweise kurzen Abschnitt im Bereich der zwei Endstellungen des Stützorgans besteht, also der Transportstellung und der vollständig ausgefahrenen Arbeitsstellung des Stützorgans. Vor dem Verlassen einer der zwei Endstellungen des Stützorgans wird die Verriegelungsvorrichtung manuell entriegelt. Dabei wird der Riegelbolzen der Verriegelungsvorrichtung in eine vorgespannte Entsperrstellung verschoben. Wird daraufhin einer der Abschnitte des Rast- und Leitorgans überfahren, so wird der Riegelbolzen durch die Leitkurve des Rast- und Leitorgans in seine Freigabestellung gebracht und rastet hinter dem Rast- und Leitorgan selbsttätig in die Sperrstellung. Das Stützorgan ist dann bis zur nächsten manuellen Entriegelung der Verriegelungsvorrichtung in seiner Position gesichert. Gelegentlich ist die Arbeitsumgebung jedoch dergestalt, dass ein vollständigges Ausfahren eines oder mehrerer der Stützorgane nicht möglich ist, beispielsweise wenn die Arbeitsmaschine in der Nähe einer Wand oder eines anderen Hindernisses positioniert ist. Gleichwohl ist es auch in solchen Fällen wichtig, dass die Stützorgane in eine wohldefinierte Abstützposition gebracht werden, da der zulässige Schwenkbereich eines Krans oder Verteilermastes durch die Stützweite begrenzt ist.

Ausgehend hiervon besteht die Aufgabe der vorliegenden Erfindung darin, eine Vorrichtung der eingangs genannten Art so weiter zu entwickeln, dass eine wahlweise Sperrung des Verschiebewegs des Stützorgans auch zwischen den Endstellungen möglich ist.

Zur Lösung dieser Aufgabe wird die in Patentanspruch 1 angegebene Merkmalskombination vorgeschlagen. Vorteilhafte Weiterbildungen und Ausgestaltungen der Erfindung ergeben sich aus den abhängigen Ansprüchen.

Der Erfindung liegt vor allem der Gedanke zu Grunde, dass eine Arretierung des Stützorgans im teilweise ausgefahrenen Zustand gelegentlich, jedoch nicht immer wünschenswert ist. Es soll dabei eine ausdrückliche Vorwahl der Bedienperson stattfinden. Erfindungsgemäß wird dies dadurch erreicht, dass sich das Rast- und Leitorgan zwischen einer ersten Rastposition für den Riegelbolzen im Bereich der eingezogenen Transportstellung des Stützorgans und einer zweiten Rastposition für den Riegelbolzen im Bereich der vollständig ausgefahrenen, ausgeschwenkten oder teleskopierten Arbeitsstellung des Stützorgans erstreckt, und dass das Rast- und Leitorgan zwischen der ersten und zweiten Rastposition mindestens eine weitere Rastposition aufweist. Nach dem Verlassen der einen Endstellung des Stützorgans kann die Verriegelungsvorrichtung manuell entsperrt werden. Der Riegelbolzen rastet dann selbsttätig bei Erreichen der weiteren Rastposition ein und arretiert das Stützorgan in dieser Zwischenposition.

Wird die Verriegelungsvorrichtung beim Verfahren des Stützorgans aus einer Endstellung heraus nicht manuell entriegelt, so fährt das Stützorgan bis zu der gegenüberliegenden Endstellung, wo die Verriegelungsvorrichtung automatisch ausgelöst und das Stützorgan arretiert wird. Um dies zu erreichen ist das Rast- und Leitorgan im Bereich der Endstellungen so gestaltet, dass die Verriegelungsvorrichtung in der einen Verschieberichtung automatisch ausgelöst wird und in der anderen Verschieberichtung nicht. Dabei weist das Rast- und Leitorgan hierzu im Bereich der ersten und zweiten Rastposition jeweils eine schwenkbare Klinke auf, die die in einer ersten Verschieberichtung des Stützorgans auf den Riegelbolzen einwirkende und diesen zwischen seiner Entsperrstellung und der Freigabestellung verschiebende Leitkurve aufweist. Insbesondere weist die Klinke eine Anschlagfläche für den Riegelbolzen auf, durch die die Klinke in der zweiten Verschieberichtung des Stützorgans aus dem Verschiebeweg des Stützorgans schwenkbar ist, ohne den Riegelbolzen in seine Freigabestellung zu schieben. Insbesondere kann die Klinke eine das Rast- und Leitorgan in Richtung Riegelbolzen überragende Blockpartie aufweisen, an der die Leitkurve und die Anschlagfläche angeordnet sind.

In bevorzugter Ausgestaltung der Erfindung weist das Rast- und Leitorgan ein Schienenelement mit einer Gleitfläche für den sich in der Freigabestellung befindlichen Riegelbolzen auf, wobei die schwenkbaren Klinken in Ausnehmungen in den Endbereichen des Schienenelements angeordnet sind. Wird die Verriegelungsvorrichtung zum Arretieren des Stützorgans in einer Zwischenstellung nach dem Verlassen des Stützorgans einer Endstellung manuell ausgelöst, so gleitet der Riegelbolzen unter Einwirkung der Feder auf dem Schienenelement, bis die weitere Rastposition für den Riegelbolzen, zweckmäßig eine Unterbrechung in der Gleitfläche, erreicht wird und der Riegelbolzen in die Rastposition einrastet. Ist zwischen den endseitigen Rastposition mehr als eine weitere Rastposition vorgesehen, so ist zu beachten, dass die Bedienperson die Verriegelungsvorrichtung (erst) vor derjenigen Rastposition auslöst, die eingenommen werden soll. Geeignete Markierungen entlang der Schiene bzw. an dem Stützorgan zeigen an, wo sich die Zwischenrastpositionen befinden und erleichtern der Bedienperson die Wahl des Zeitpunkts zum Auslösen der Verriegelungsvorrichtung. Schließlich weist die Klinke vorteilhafterweise einen an eine Endstirnfläche des Schienenelements anschlagenden Anschlaghaken auf, der den Schwenkwinkel der Klinke auf weniger als 90° begrenzt. Hierdurch wird verhindert, dass die Klinke durch den Riegelbolzen oder durch äußere Einflüsse so weit aus ihrem Wirkbereich verschwenkt wird, dass ihre Funktion vorrübergehend oder dauerhaft nicht gewährleistet ist.

Die Möglichkeit der Arretierung des Stützorgans in einer teilweise ausgefahrenen Position wird aus Sicherheitsgründen durch eine sensorische Überwachung der Ist-Position des Stützorgans ergänzt, die Teil einer elektronischen Steuerungsvorrichtung für den Kran oder Verteilermast ist. Eine derartige Steuerungsvorrichtung ist beispielsweise aus der EP 2 038 493 B1 bekannt. Dort ist eine Autobetonpumpe beschrieben, mit einem als Träger für eine Förderleitung dienenden Knickmast und mit zwei vorderen und zwei rückwärtigen, von einer Fahrstellung in eine Abstützstellung ausfahrbaren, mit je einem teleskopierbaren Stützbein auf einem Untergrund abstützbaren Stützauslegern. Außerdem weist jeder Stützausleger eine innere, fahrgestellnahe und mindestens eine äußere, fahrgestellferne Abstützstellung auf, die unter Bildung definierter Abstützkonfigurationen für die vier Stützausleger frei wählbar sind. Weiter ist eine Steuerungseinrichtung für die Mastarmbewegung vorgesehen, die eine auf die gewählte Abstützkonfiguration ansprechende Softwareroutine aufweist, die den Schwenkwinkel des ersten Knickarms um seine Knickachse und einen zugehörigen Drehwinkelbereich des Drehkopfs um die Hochachse nach Maßgabe der gewählten Abstützkonfiguration begrenzt. Eine Besonderheit der dort beschriebenen Erfindung besteht darin, dass ein Wählschalter mit mehreren, verschiedenen Abstützkonfigurationen entsprechenden Schaltstellungen vorgesehen ist, und dass die Steuerungseinrichtung für die Mastarmbewegung auf die Schaltstellungen des Wählschalters anspricht. Die Steuerungseinrichtung für die Mastarmbewegung weist außerdem eine auf die gewählte Abstützkonfiguration ansprechende Softwareroutine oder Begrenzungsschaltung auf, die den Schwenkwinkelbereich des ersten Mastarms um seine Knickachse und einen zugehörigen Drehwinkelbereich des Drehkopfs um seine Hochachse nach Maßgabe der gewählten Abstützkonfiguration begrenzt. Die sensorisch erfassten Zwischenrastpositionen der vorliegenden Erfindung werden vorteilhaft in eine derartige Steuerungseinrichtung eingebunden.

Im Folgenden wird die Erfindung anhand der in der Zeichnung in schematischer Weise dargestellten Ausführungsbeispiele näher erläutert. Es zeigen
- Fig. 1: eine Seitenansicht eines Stützorgans mit einem Rast- und Leitorgan für eine Verriegelungsvorrichtung mit jeweils einer endseitigen Rastposition und zwei dazwischen angeordneten Rastpositionen zum Arretieren des Stützorgans;
- Fig. 2: eine perspektivische Ansicht des Stützorgans gemäß Fig. 1 in seiner vollständig ausgefahrenen Position;
- Fig. 3a: bis c eine Seitenansicht, Draufsicht und Stirnseitenansicht eines Endbereichs des Rast- und Leitorgans, mit einer sich in ihrer Sperrstellung befindlichen Verriegelungsvorrichtung;
- Fig. 4a: bis c eine Seitenansicht, Draufsicht und Stirnseitenansicht eines Endbereichs des Rast- und Leitorgans, mit einer sich in ihrer Entsperrstellung befindlichen Verriegelungsvorrichtung;
- Fig. 5a: bis c eine Seitenansicht, Draufsicht und Stirnseitenansicht eines Endbereichs des Rast- und Leitorgans, mit einer gegen eine schwenkbare Klinke des Rast- und Leitorgans anlaufenden Verriegelungsvorrichtung;
- Fig. 6a: bis c eine Seitenansicht, Draufsicht und Stirnseitenansicht eines Endbereichs des Rast- und Leitorgans, mit einer sich in ihrer Entsperrstellung befindlichen Verriegelungsvorrichtung nachdem das Stützorgan aus seiner Endstellung heraus verfahren wurde;
- Fig. 7a: bis c eine Seitenansicht, Draufsicht und Stirnseitenansicht eines Endbereichs des Rast- und Leitorgans, mit einer sich in ihrer Entsperrstellung befindlichen Verriegelungsvorrichtung, die auf eine Leitkurve der Klinke aufläuft;
- Fig. 8a: bis c eine Seitenansicht, Draufsicht und Stirnseitenansicht eines Endbereichs des Rast- und Leitorgans, mit einer sich in ihrer Freigabestellung befindlichen Verriegelungsvorrichtung;
- Fig. 9a: bis c eine Seitenansicht, Draufsicht und Stirnseitenansicht eines Endbereichs des Rast- und Leitorgans, mit einer sich in ihrer Sperrstellung befindlichen Verriegelungsvorrichtung, nachdem die Leitkurve der Klinke überfahren wurde; und
- Fig. 10: eine perspektivische Ansicht gemäß Fig. 2, wobei das Stützorgan in einer Zwischenstellung arretiert ist.

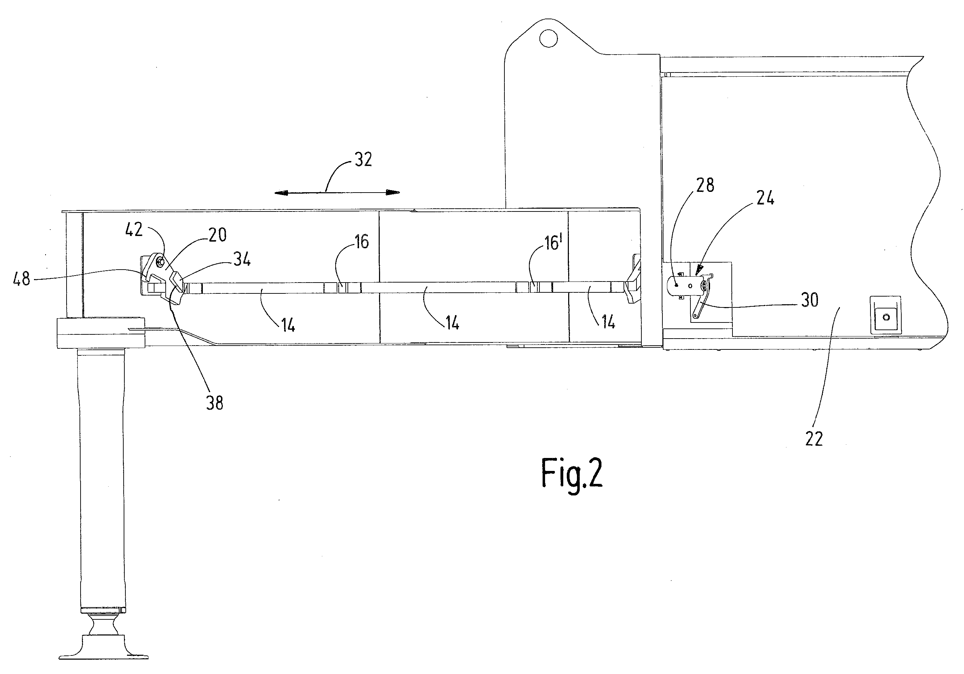

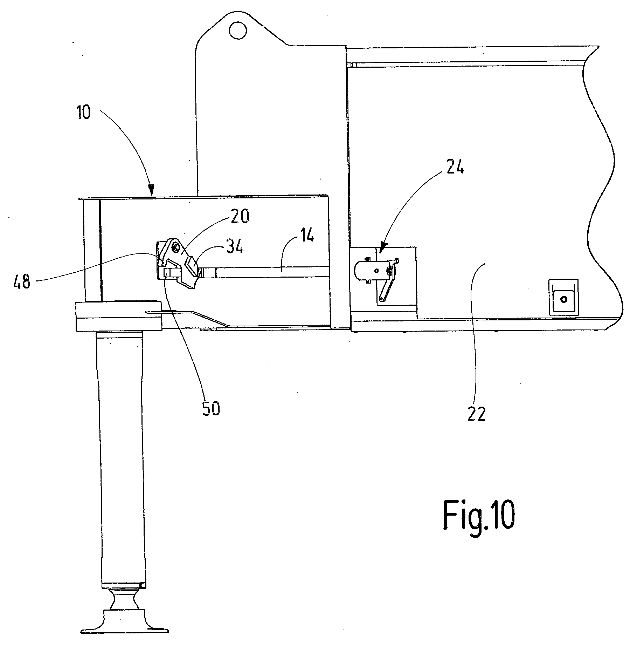

Die in der Zeichnung dargestellte Vorrichtung umfasst im Wesentlichen ein an einem Fahrgestell einer Arbeitsmaschine wie einer Autobetonpumpe o.dgl. diesem gegenüber verschieblich angeordnetes Stützorgan 10 und ein an dem Stützorgan angeordneten Rast- und Leitorgan 12, das sich zwischen zwei von dem Stützorgan einnehmbaren Endpositionen erstreckt. Das Rastund Leitorgan 12 besteht seinerseits im Wesentlichen aus einem als Rastpositionen dienenden Unterbrechungen 16, 16' aufweisenden Schienenelement 14 und zwei in dessen Endbereichen angeordneten, teilweise in Ausnehmungen 18, 18' des Schienenelements 14 eingreifenden und schwenkbar gelagerten Klinken 20, 20'. Vorzugsweise an einem Stützorgankasten 22 (Fig. 2 und Fig. 10) ist ein Riegelmechanismus 24 mit einem Riegelbolzen 26 angeordnet, der mit dem Rast- und Leitorgan 12 derart zusammenwirkt, dass das Stützorgan 10 in End- und Zwischenpositionen bezüglich dem Fahrgestell der Arbeitsmaschine arretierbar ist.

Der Aufbau und die Funktionsweise des Riegelmechanismus 24 ist in der EP 0 633 847 B1 ausführlich beschrieben. Der Riegelbolzen 26 weist demnach drei Funktionsstellungen auf: Eine Sperrstellung, eine Entsperrstellung und eine Freigabestellung.

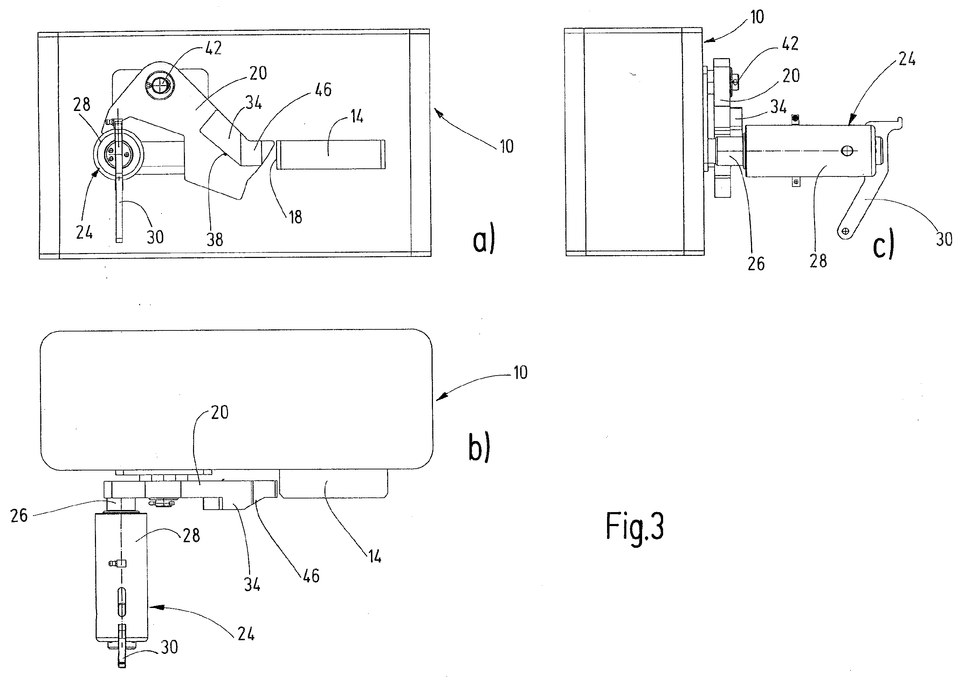

In der Sperrstellung (Fig. 2, 3, 9 und 10) ist der Riegelbolzen 26 durch Krafteinwirkung einer in dem Gehäuse 28 des Riegelmechanismus angeordneten Feder aus diesem heraus geschoben. Wie in Fig. 3b und 3c dargestellt bildet der Riegelbolzen 26 dann einen Anschlag für die stirnseitige Endfläche des Schienenelements 14 (in beiden Endpositionen des Stützorgans) bzw. die stirnseitigen Begrenzungsflächen der Unterbrechungen 16, 16' des Schienenelements (in den zwei Zwischenpositionen des Stützorgans). Das Stützorgan 10 ist dann in seiner Verschieberichtung blockiert, d. h. bezüglich dem Fahrgestell der Fahrmaschine arretiert.

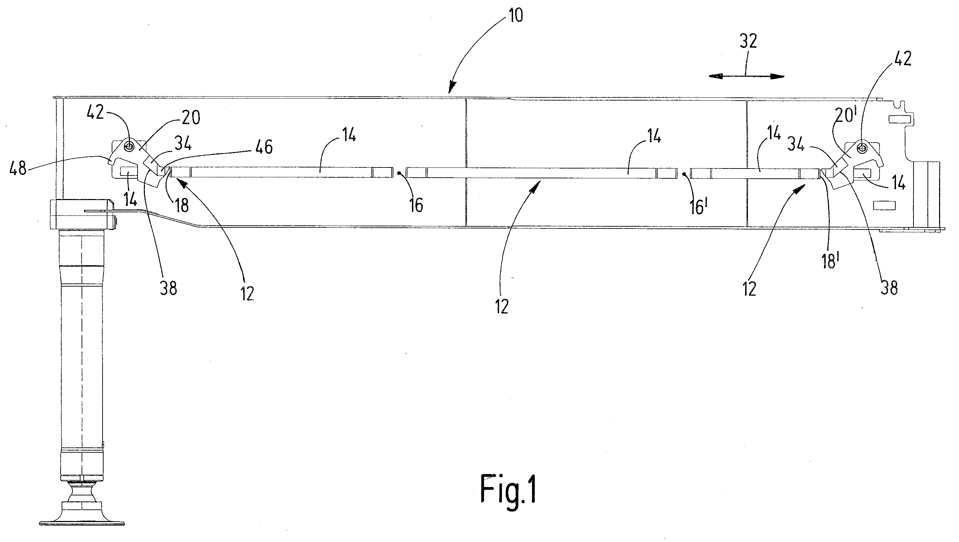

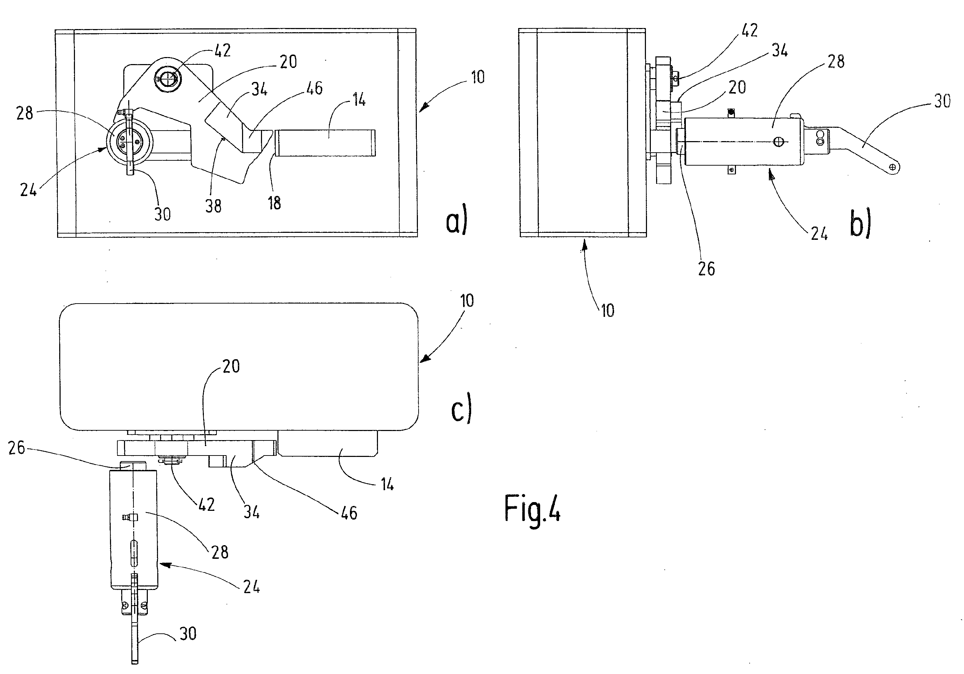

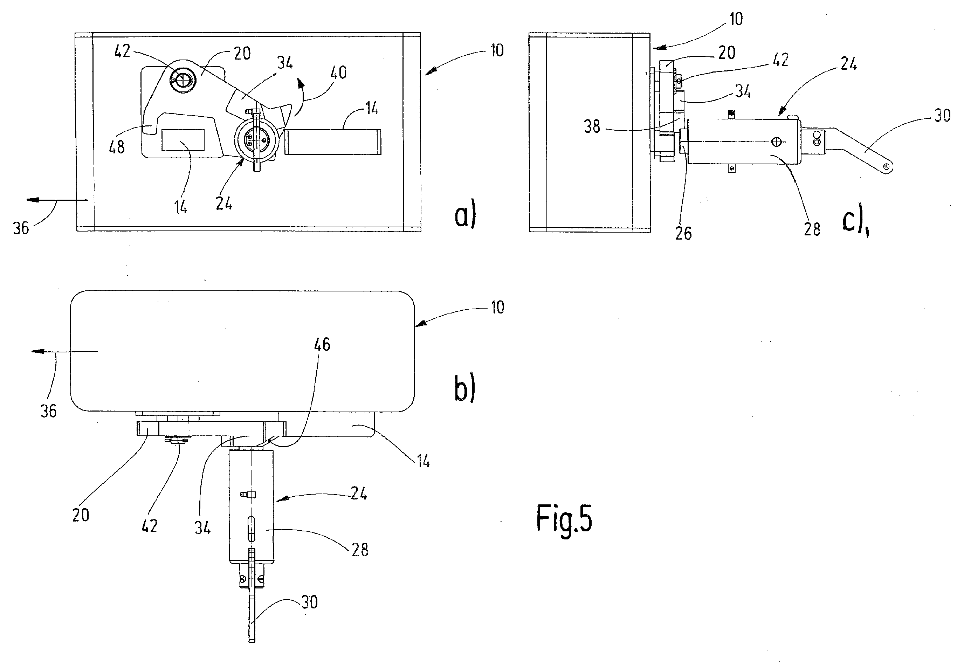

Der Riegelbolzen 26 wird durch manuelle Betätigung des Hebels 30 des Riegelmechanismus 24 von einer Bedienperson entgegen der Federkraft in seine Entsperrstellung (Fig. 4, 5, 6) verschoben, in der der Riegelbolzen in das Gehäuse 28 hinein geschoben und in dieser Stellung gesichert ist, d. h. ohne äußere Einwirkung verbleibt der Riegelbolzen 26 trotz Einwirkens der Federkraft in dieser Stellung. Das Schienenelement 14 des Rast- und Leitorgans 12 ist in dieser Stellung des Riegelbolzens 26 freigegeben, das Stützorgan kann in beiden Verschieberichtungen (Doppelpfeil 32 in Fig. 1 und 2) bewegt werden. Die Klinke 20 weist jedoch eine über das Schienenelement überstehende Blockpartie 34 auf, gegenüber der der Riegelbolzen 26 nicht freigängig ist. In der in Fig. 5 durch den Pfeil 36 angezeigten Verschieberichtung des Stützorgans 10 schlägt der Riegelbolzen 26 gegen eine schräge Anschlagfläche 38 der Blockpartie 34 an, wodurch die Klinke angehoben und in Richtung des Pfeils 40 um ihre Befestigungsachse 42 geschwenkt wird, und zwar so weit bis die Blockpartie 34 aus dem Weg des Riegelbolzens 26 geschwenkt ist und dieser die Klinke passieren kann. Hierbei findet keine Krafteinwirkung auf den Riegelbolzen hinsichtlich seiner Funktionsstellung statt, d. h. er verbleibt in der Entsperrstellung.

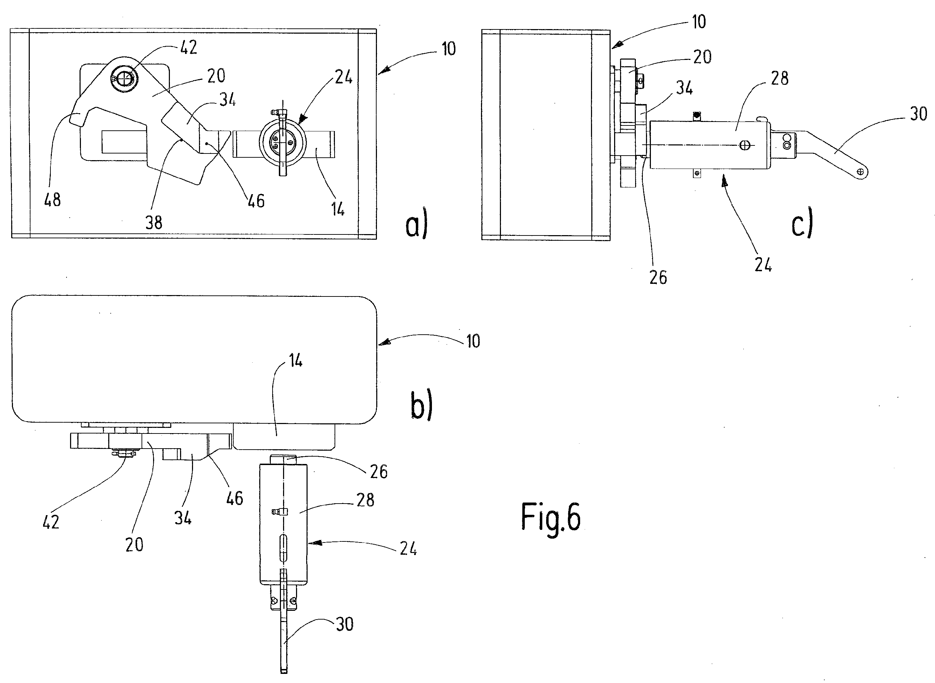

Das Stützorgan befindet sich nun in der in Fig. 6 dargestellten Relativlage zu dem Riegelmechanismus 24. Die Bedienperson hat nun die Wahl, das Stützorgan 10 vollständig auszufahren oder eine Arretierung in einer Zwischenstellung zu veranlassen.

In dem letztgenannten Fall ist eine manuelle Betätigung des Riegelmechanismus 24 erforderlich, durch die der Riegelbolzen 26 aus der Entsperrstellung in die Sperrstellung gebracht wird. Der Riegelbolzen 26 liegt dann teilweise aus dem Gehäuse 28 heraus geschoben unter Einwirkung der Federkraft an der ihm zugewandten Oberfläche des Schienenelements 14 an. Das Schienenelement 14 gleitet unter dem Riegelbolzen 26 bis zu der Unterbrechung 16 oder 16' (je nachdem in welcher Ausfahrposition des Stützorgans 10 die Bedienperson den Riegelmechanismus 24 betätigt hat). Sobald der Riegelbolzen 26 mit der Unterbrechung 16 oder 16' fluchtet, wird der Riegelbolzen durch die Feder in seine vollständig aus dem Gehäuse 28 heraus geschobene Sperrstellung verschoben und rastet in die Unterbrechung 16 oder 16' ein. Hierdurch wird das Stützorgan 10 in dieser Position arretiert, wie in Fig. 10 dargestellt.

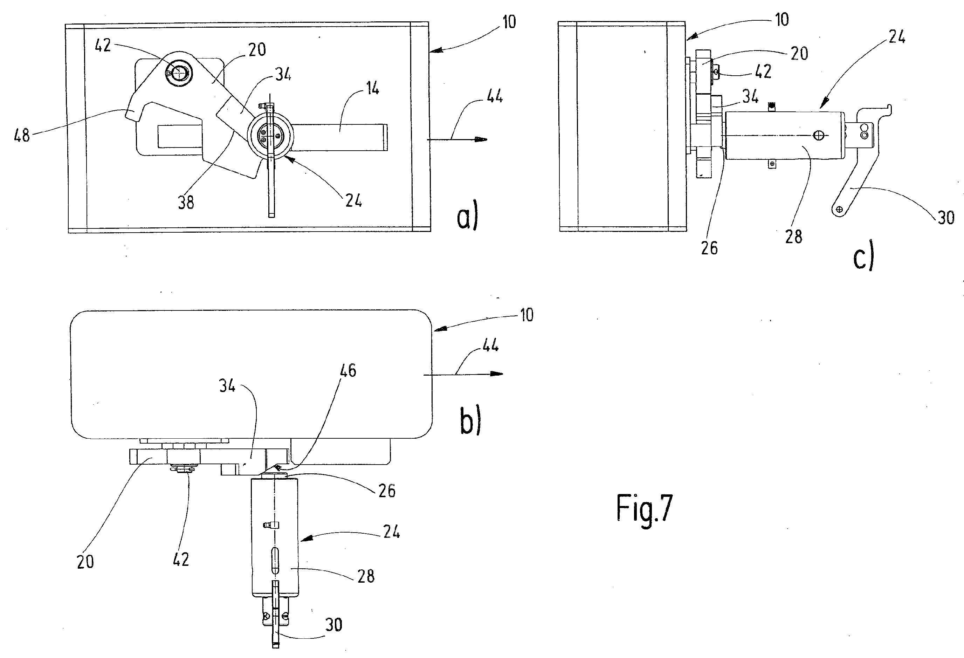

Soll das Stützorgan 10 vollständig ausgefahren werden, unterlässt die Bedienperson eine manuelle Betätigung des Riegelmechanismus 24. Es erfolgt eine automatische Betätigung des Riegelmechanismus 24 durch die Klinke 20', die anhand der Fig. 7 bis 9 erläutert werden kann. Hierzu ist anzumerken, dass die Klinken 20, 20' spiegelsymmetrisch zueinander ausgebildet sind und die Figuren lediglich denjenigen Bereich des Rast- und Leitorgans 12 darstellen, der die Klinke 20 aufweist. Die automatische Auslösung des Riegelmechanismus 24 erfolgt jedoch nach dem gleichen Prinzip.

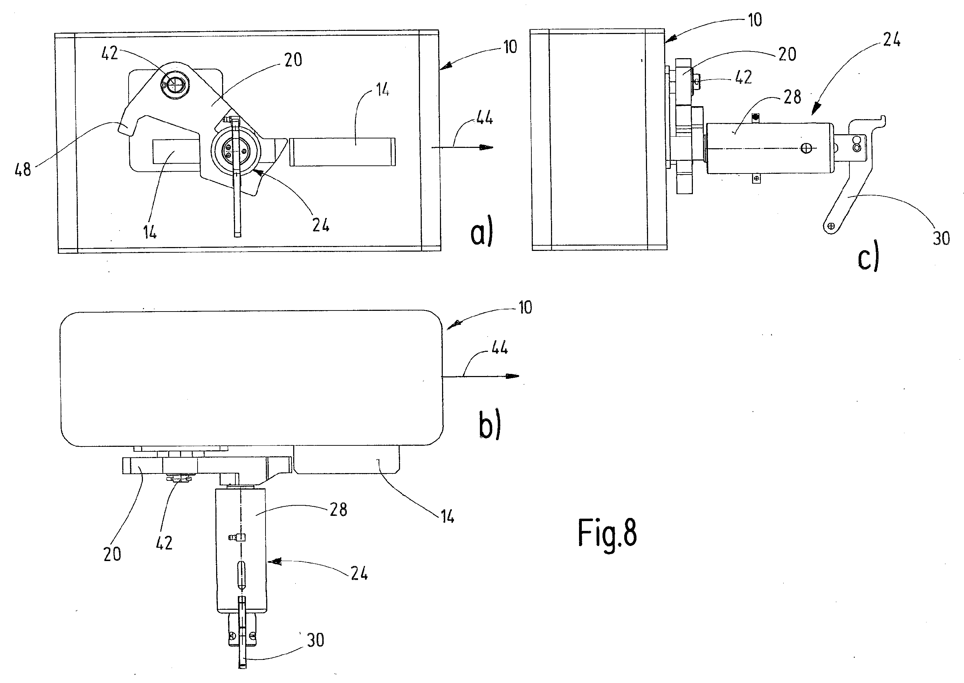

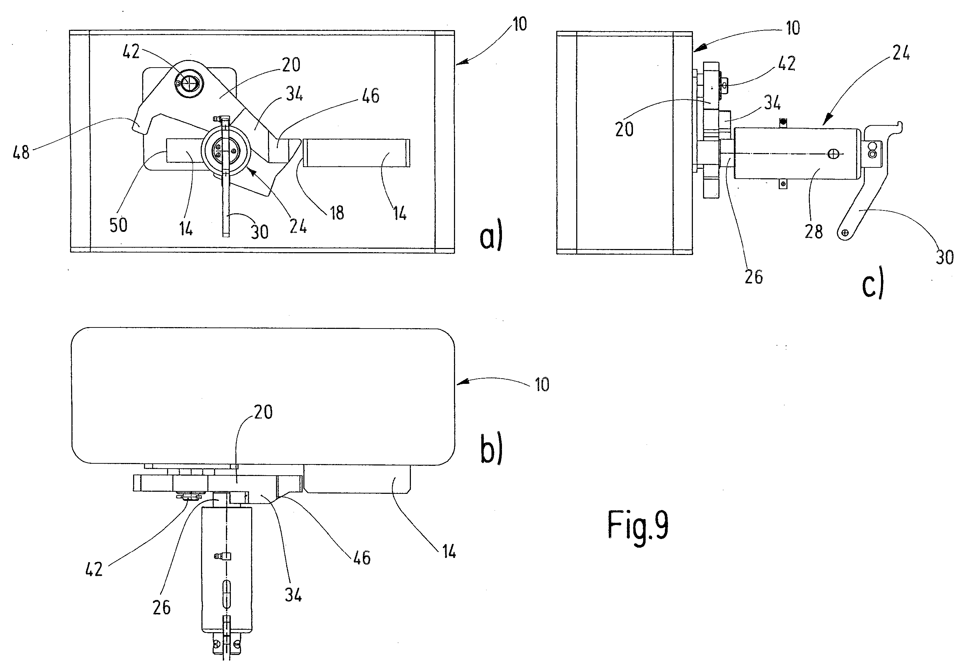

In Fig. 7 bewegt sich das Stützorgan nun in Richtung des Pfeils 44. Der Riegelbolzen 26 schlägt an einer schrägen Leitfläche 46 der Blockpartie 34 der Klinke 20 an. In dieser Verschieberichtung des Stützorgans 10 ist der Riegelbolzen auf Grund der geometrischen Ausgestaltung und Lagerung der Klinke 20 nicht in der Lage, diese aus dem Verschiebeweg heraus zu schwenken. Vielmehr wird der Riegelbolzen 26 entlang der Leitfläche 46 ausgehend von der Entsperrstellung weiter in das Gehäuse 28 hinein bis in seine Freigabestellung (Fig. 8) geschoben. Aus dieser Freigabestellung heraus wird der Riegelbolzen 26 durch die in dem Gehäuse 28 des Riegelmechanismus 24 angeordnete Feder in seine Sperrstellung verschoben. Dies erfolgt, sobald das durch die Blockpartie 34 der Klinke 20 gebildete Hindernis überwunden ist (Fig. 9). Der Riegelbolzen 26 schlägt dann zunächst an dem endseitigen Bereich des Schienenelements 14 an und gleitet so lange auf diesem, bis dessen Ende erreicht ist. Der Riegelbolzen 26 wird daraufhin von der Feder aus dem Gehäuse 28 bis in seine Sperrstellung geschoben und die in Fig. 3 dargestellte Konfiguration, in der das Stützorgan 10 in seiner Endlage arretiert ist, ist wieder erreicht.

Um zu verhindern, dass die Klinke 20, 20' durch den Riegelbolzen 26 oder durch äußere Einflüsse aus ihrer Ausnehmung 18, 18' in dem Schienenelement 14 herausgeschwenkt wird und somit in Sperrrichtung nicht mehr auf den Riegelmechanismus einwirken könnte, weist die Klinke einen Anschlaghaken 48 auf, der an der freien Stirnseite 50 des Schienenelements anschlägt und den Schwenkwinkel der Klinke auf unter 90° begrenzt. Die Klinke 20, 20' ist dann in jedem Fall durch die Schwerkrafteinwirkung in der Lage, ihre Wirkstellung einzunehmen.

In der vorstehend beschriebenen Zeichnung sind lediglich die mechanischen Komponenten der Vorrichtung beschreiben. Es sind jedoch darüber hinaus elektronische Komponenten wie Positionssensoren für das Stützorgan 10 und die Verriegelungsvorrichtung vorgesehen, die in ein Steuerungssystem der Arbeitsmaschine eingebunden sind und sicherstellen, dass ein zulässiger Schwenkbereich eines Krans oder Verteilermastes auch bei nur teilweise ausgefahrenen Stützorganen nicht überschritten wird.

Zusammenfassend ist folgendes festzuhalten: Die Erfindung betrifft eine Verriegelungsvorrichtung für an einem Fahr- oder Traggestell angeordnete und von einer eingezogenen Transportstellung in eine ausgezogene Arbeitsstellung ausfahrbare, ausschwenkbare oder teleskopierbare Stützorgane 10 für eine Arbeitsmaschine, mit einem Riegelbolzen 26, der in einer gestellfesten, quer zur Ausziehrichtung des Stützorgans 10 angeordneten Führungsbuchse zwischen einer Sperrstellung und einer Entsperrstellung verschiebbar ist und unter Einwirkung einer Feder in Richtung Sperrstellung vorgespannt ist, mit einem den Riegelbolzen 26 zwischen der Sperrstellung und der Entsperrstellung verschiebenden Betätigungsorgan 30, und mit einem an dem Stützorgan 10 starr angeordneten Rast- und Leitorgan 12 für den Riegelbolzen, wobei das Rast- und Leitorgan 12 eine den Riegelbolzen 26 in eine Freigabestellung schiebende Leitkurve 46 aufweist und wobei der Riegelbolzen 26 in der Freigabestellung selbsttätig in seine Sperrstellung bewegbar ist. Um bei begrenzten Raumverhältnissen und nur teilweise ausgefahrenen Stützorganen eine Arretierung der Stützorgane in definierten Stellungen vornehmen zu können, wird gemäß der Erfindung vorgeschlagen, dass sich das Rast- und Leitorgan 12 zwischen einer ersten Rastposition für den Riegelbolzen 26 im Bereich der eingezogenen Transportstellung des Stützorgans 10 und einer zweiten Rastposition für den Riegelbolzen 26 im Bereich der vollständig ausgefahrenen, ausgeschwenkten oder teleskopierten Arbeitsstellung des Stützorgans 10 erstreckt, und dass das Rast- und Leitorgan 12 zwischen der ersten und zweiten Rastposition mindestens eine weitere Rastposition 16, 16' aufweist.

## Patentansprüche

1. Verriegelungsvorrichtung für an einem Fahr- oder Traggestell angeordnete und von einer eingezogenen Transportstellung in eine ausgezogene Arbeitsstellung ausfahrbare, ausschwenkbare oder teleskopierbare Stützorgane (10) für eine Arbeitsmaschine, mit einem Riegelbolzen (26), der in einer gestellfesten, quer zur Ausziehrichtung des Stützorgans (10) angeordneten Führungsbuchse zwischen einer Sperrstellung und einer Entsperrstellung verschiebbar ist und unter Einwirkung einer Feder in Richtung Sperrstellung vorgespannt ist, mit einem den Riegelbolzen (26) zwischen der Sperrstellung und der Entsperrstellung verschiebenden Betätigungsorgan (30), und mit einem an dem Stützorgan (10) starr angeordneten Rast- und Leitorgan (12) für den Riegelbolzen, wobei das Rast- und Leitorgan (12) eine den Riegelbolzen (26) in eine Freigabestellung schiebende Leitkurve (46) aufweist und wobei der Riegelbolzen (26) in der Freigabestellung selbsttätig in seine Sperrstellung bewegbar ist, wobei sich das Rast- und Leitorgan (12) zwischen einer ersten Rastposition für den Riegelbolzen (26) im Bereich der eingezogenen Transportstellung des Stützorgans (10) und einer zweiten Rastposition für den Riegelbolzen (26) im Bereich der vollständig ausgefahrenen, ausgeschwenkten oder teleskopierten Arbeitsstellung des Stützorgans (10) erstreckt, **dadurch gekennzeichnet, dass** das Rastund Leitorgan (12) zwischen der ersten und zweiten Rastposition mindestens eine weitere Rastposition (16, 16') aufweist und dass das Rastund Leitorgan (12) im Bereich der ersten und zweiten Rastposition jeweils eine schwenkbare Klinke (20, 20') aufweist, die die in einer ersten Verschieberichtung des Stützorgans (10) auf den Riegelbolzen (26) einwirkende und diesen zwischen seiner Entsperrstellung und der Freigabestellung verschiebende Leitkurve (46) aufweist.

2. Vorrichtung nach Anspruch 1, **dadurch gekennzeichnet, dass** die Klinke (20, 20') eine Anschlagfläche (38) für den Riegelbolzen (26) aufweist, durch die die Klinke (20, 20') in einer zweiten Verschieberichtung des Stützorgans (10) aus dem Verschiebeweg des Stützorgans schwenkbar ist, ohne den Riegelbolzen (26) in seine Freigabestellung zu schieben.

3. Vorrichtung nach Anspruch 2, **dadurch gekennzeichnet, dass** die Klinke (20, 20') eine das Rast- und Leitorgan (12) in Richtung Riegelbolzen (26) überragende Blockpartie (34) aufweist, an der die Leitkurve (46) und die Anschlagfläche (38) angeordnet sind.

4. Vorrichtung nach einem der Ansprüche 1 bis 3, **dadurch gekennzeichnet, dass** das Rast- und Leitorgan (12) ein Schienenelement (14) mit einer Gleitfläche für den sich in der Freigabestellung befindlichen Riegelbolzen (26) aufweist.

5. Vorrichtung nach Anspruch 4, **dadurch gekennzeichnet, dass** die mindestens eine weitere Rastposition für den Riegelbolzen (26) durch eine Unterbrechung (16, 16') in dem Schienenelement (14) gebildet ist.

6. Vorrichtung nach einem der Ansprüche 1 bis 5, **dadurch gekennzeichnet, dass** die Klinke (20, 20') einen an eine Endstirnfläche (50) des Schienenelements (14) anschlagenden Anschlaghaken (48) aufweist, der den Schwenkwinkel der Klinke (20, 20') auf weniger als 90° begrenzt.

## Claims

1. A locking device for supporting members (10) for a machine, said supporting members being arranged on a chassis or load-bearing frame and being able to be extended, swung out or telescoped from a retracted transport position into an extended working position, said locking device having a locking bolt (26) which is displaceable between a blocking position and an unblocking position in a guide bushing, which is fixed to the chassis or frame and is arranged transversely with respect to the pull-out direction of the supporting member (10), and is biased in the direction of the blocking position under the influence of a spring, having an actuating member (30) which displaces the locking bolt (26) between the blocking position and the unblocking position, and having an engagement and guiding member (12) for the locking bolt, said engagement and guiding member being arranged rigidly on the supporting member (10), wherein the engagement and guiding member (12) comprises a cam (46) which pushes the locking bolt (26) into a release position, and wherein, in the release position, the locking bolt (26) is movable automatically into its blocking position, wherein the engagement and guiding member (12) extends between a first engagement position for the locking bolt (26) in the region of the retracted transport position of the supporting member (10) and a second engagement position for the locking bolt (26) in the region of the fully extended, swung-out or telescoped working position of the supporting member (10), **characterized in that** the engagement and guiding member (12) comprises at least one further engagement position (16, 16') between the first and second engagement positions, and **in that** the engagement and guiding member (12) has a respective pivotable latch (20, 20') in the region of the first and second engagement positions, said latch having the cam (46) which acts on the locking bolt (26) in a first displacement direction of the supporting member (10) and displaces said locking bolt between its unblocking position and the release position.

2. The device as claimed in claim 1, **characterized in that** the latch (20, 20') has a stop surface (38) for the locking bolt (26), by means of which stop surface the latch (20, 20') is pivotable in a second displacement direction of the supporting member (10) out of the displacement path of the supporting member without pushing the locking bolt (26) into its release position.

3. The device as claimed in claim 2, **characterized in that** the latch (20, 20') has a block portion (34) which projects over the engagement and guiding member (12) in the direction of the locking bolt (26) and on which the cam (46) and the stop surface (38) are arranged.

4. The device as claimed in one of claims 1 to 3, **characterized in that** the engagement and guiding member (12) has a rail element (14) with a sliding surface for the locking bolt (26) situated in the release position.

5. The device as claimed in claim 4, **characterized in that** the at least one further engagement position for the locking bolt (26) is formed by an interruption (16, 16') in the rail element (14).

6. The device as claimed in one of claims 1 to 5, **characterized in that** the latch (20, 20') has a stop hook (48) which strikes against an end surface (50) of the rail element (14) and limits the pivoting angle of the latch (20, 20') to less than 90°.

## Revendications

1. Dispositif de verrouillage pour des organes de support (10) pour un engin de travail, qui sont disposés sur un châssis ou sur un bâti porteur et qui peuvent se déployer, pivoter ou s'étendre d'une position de transport rentrée dans une position de travail sortie, avec un boulon de verrouillage (26), qui peut être déplacé entre une position de verrouillage et une position de déverrouillage dans une douille de guidage solidaire du châssis ou bâti et disposée transversalement à la direction de sortie de l'organe de support (10), et qui est précontraint sous l'action d'un ressort en direction de la position de verrouillage, avec un organe d'actionnement (30) déplaçant le boulon de verrouillage (26) entre la position de verrouillage et la position de déverrouillage, et avec un organe (12) d'enclenchement et de guidage pour le boulon de verrouillage, disposé rigidement sur l'organe de support (10), sachant que l'organe (12) d'enclenchement et de guidage présente une came de guidage (46) poussant le boulon de verrouillage (26) dans une position de libération et sachant que le boulon de verrouillage (26), lorsqu'il se trouve dans la position de libération, peut être déplacé automatiquement dans sa position de verrouillage, sachant que l'organe (12) d'enclenchement et de guidage s'étend entre une première position d'enclenchement pour le boulon de verrouillage (26) dans la région de la position de transport rentrée de l'organe de support (10) et une deuxième position d'enclenchement pour le boulon de verrouillage (26) dans la région de la position de travail entièrement déployée, pivotée ou étendue de l'organe de support (10), **caractérisé en ce que** l'organe (12) d'enclenchement et de guidage présente au moins une position d'enclenchement supplémentaire (16, 16') entre la première et la deuxième position d'enclenchement, et **en ce que** l'organe (12) d'enclenchement et de guidage présente respectivement dans la région de la première et de la deuxième position d'enclenchement un cliquet pivotant (20, 20') qui présente la came de guidage (46) agissant sur le boulon de verrouillage (26) dans une première direction de déplacement de l'organe de support (10) et déplaçant ce boulon de verrouillage entre sa position de déverrouillage et la position de libération.

2. Dispositif selon la revendication 1, **caractérisé en ce que** le cliquet (20, 20') présente une surface de butée (38) pour le boulon de verrouillage (26), par laquelle le cliquet (20, 20') peut, dans une deuxième direction de déplacement de l'organe de support (10), être pivoté en dehors de la trajectoire de déplacement de l'organe de support sans pousser le boulon de verrouillage (26) dans sa position de libération.

3. Dispositif selon la revendication 2, **caractérisé en ce que** le cliquet (20, 20') présente une partie de blocage (34) qui dépasse de l'organe (12) d'enclenchement et de guidage en direction du boulon de verrouillage (26) et sur laquelle sont disposées la came de guidage (46) et la surface de butée (38).

4. Dispositif selon l'une des revendications 1 à 3, **caractérisé en ce que** l'organe (12) d'enclenchement et de guidage présente un élément formant rail (14) avec une surface de glissement pour le boulon de verrouillage (26) se trouvant dans la position de libération.

5. Dispositif selon la revendication 4, **caractérisé en ce que** la position d'enclenchement supplémentaire au moins unique pour le boulon de verrouillage (26) est formée par une interruption (16, 16') dans l'élément formant rail (14).

6. Dispositif selon l'une des revendications 1 à 5, **caractérisé en ce que** le cliquet (20, 20') présente un crochet de butée (48) qui vient buter contre une face frontale terminale (50) de l'élément formant rail (14) et qui limite l'angle de pivotement du cliquet (20, 20') à moins de 90°.
